# EUROPEAN PATENT APPLICATION

(11) **EP 0 855 578 A2**
(43) Date of publication of application: **29.07.1998**
(21) Application number: 98101181.0
(22) Date of filing: 23.01.1998
(51) Int. Cl.: G01F 1/704, G01M 15/00

(54) **Exhaust gas flow measuring equipment of internal combustion engine and process for calibrating sensitivity of trace gas flow meter**

(30) Priority: 25.01.1997 JP 25954/97; 31.01.1997 JP 33032/97; 14.02.1997 JP 47100/97; 23.10.1997 JP 309382/97
(71) Applicant: HORIBA, LTD., Minami-ku Kyoto (JP)
(72) Inventor: Hirano, Takashi, c/o Horiba, Ltd., Minami-ku, Kyoto (JP); Shimooka, Minoru, c/o Horiba, Ltd., Minami-ku, Kyoto (JP); Adachi, Masayuki, c/o Horiba, Ltd., Minami-ku, Kyoto (JP); Makimura, Kazuki, Minami-ku, Kyoto (JP)
(74) Representative: Müller, Frithjof E., Dipl.-Ing.

(57) **Abstract**

This invention provides an exhaust gas flow rate measuring equipment of the internal combustion engine (2) which can preferably supply helium gas only to a trace gas analyzer (13), can prevent the condition in which the inside of the trace gas analyzer (13) in the high vacuum stage causes pressure fluctuation due to the viscosity of the exhaust gas and the introduction rate of helium gas fluctuates in proportion to the fluctuation rate, and can solve the problem in that the sensitivity varies in accordance with the gas component ratio in the exhaust gas.

## Description

### BACKGROUND OF THE INVENTION

### Field of the Invention

The present invention relates to an exhaust gas flow measuring equipment for internal combustion engine for measuring the flow rate of gas discharged from the internal combustion engine such as automobile engines, etc. and to a process for calibrating the sensitivity of the trace gas flow meter.

### Description of the Prior Art

In order to carry out transient characterization of gas discharged from the internal combustion engine (hereinafter called the "exhaust gas"), the exhaust gas flow rate must be measured in real time. There is a trace method as one of the techniques to continuously measure the exhaust gas flow rate. This trace method introduces inert gas which is difficult to react with the components in the exhaust gas, for example, helium gas, to the exhaust passage linked to the internal combustion engine, measures the helium gas concentration by the trace gas analyzer connected to the gas sampling passage connected to the exhaust passage, and determines the exhaust gas flow rate in real time by dividing the introducing rate of the helium gas by the concentration of the helium gas.

For the equipment for measuring the exhaust gas flow rate operating on the above-mentioned measuring principle, for example, there is an equipment disclosed in Japanese Non-examined Patent Publication No. Hei 8-15253. FIG. 22 schematically shows the engine exhaust gas flow rate measuring equipment disclosed in this patent publication, and in FIG. 22, numeral 71 designates an engine, numeral 72 a compressed gas cylinder for introducing helium gas as inert gas into this engine 71, and numeral 73 a pressure reducing valve. Numeral 74 designates an exhaust passage linked to the engine 71. Numeral 75 designates a gas sampling passage branched and connected to the exhaust passage 44 at the upstream side, and is equipped with a filter 76 and a suction pump 77, and the downstream side is joined and connected to the exhaust passage 74. Numeral 78 designates a trace gas analyzer connected to the gas sampling passage 75 via a connecting member 79.

Now, for the trace gas analyzer 78, a quadruple mass spectrometer, sector field mass spectrometer, etc. are used, but since these analyzers have high vacuum inside, microleakage orifice or VLV (variable leak valve) is used for the connecting member 79 in connecting to the gas sampling passage 75 to which the filter 76, the suction pump 77, etc. are installed.

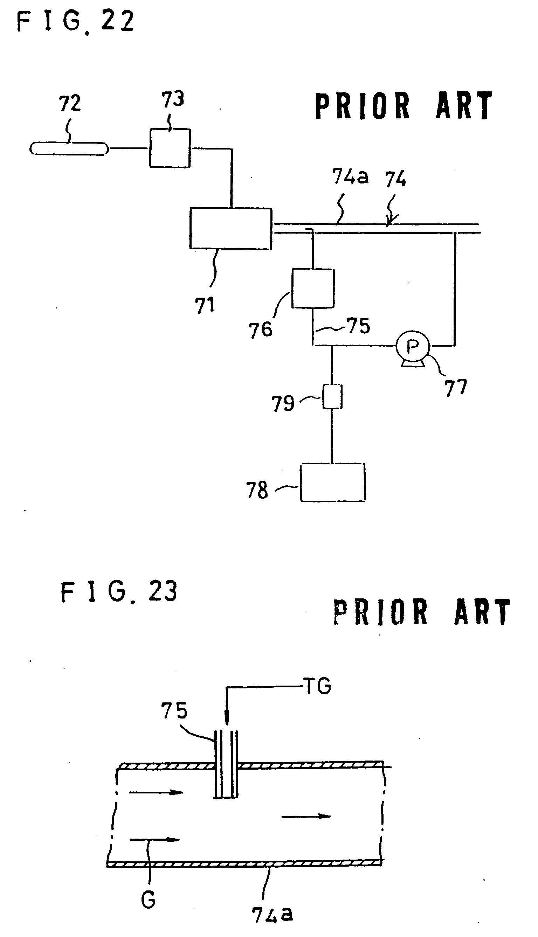

In measuring the exhaust gas flow rate, for example, helium gas must be introduced as trace gas into the exhaust pipe 74a linked to the engine 71, but conventionally, as shown in FIG. 23, a pipe 75 comprising, for example, tetrafluoroethylene resin which is strong to, for example, exhaust gas G and can stand comparatively high temperature, is inserted and connected to cross nearly at right angles the direction in which the exhaust gas G flows, and helium gas TG is introduced as trace gas to the exhaust pipe 74a in which exhaust gas G flows via this pipe 75.

However, under the above-mentioned configuration, there are problems shown in Paragraphs (1), (2), and (3), and the measurement accuracy of the exhaust gas flow rate was not always satisfactory.
(1) Since the micro leakage orifice or VLV has a large inside dead volume, when a plurality of other gas analyzers are connected to the gas sampling passage 75 and exhaust gas components such as CO, CO₂, NOₓ, HC, etc. are analyzed with these gas analyzers, time lag is generated in the trace gas analyzer 78 and the gas analyzer, and the output timing must be adjusted in both analyzers.
(2) Since the inside of the trace gas analyzer 78 is originally of high vacuum, the sensitivity varies in accordance with change in vacuum pressure that depends on the gas component ratio in the exhaust gas. That is, to the trace gas analyzer 78 with temperature adjusted to a specified level, helium gas is introduced while helium gas is mixed in the exhaust gas at a specified concentration via the connecting member 79. Now, in the continuous measurement of exhaust gas discharged from the internal combustion engine such as automobile engines, the exhaust gas component to be measured suddenly changes, and difference is generated in pressure inside the trace gas analyzer 78 due to the difference of viscosity depending on this exhaust gas component. Now let the pressure, volume, and temperature inside the trace gas analyzer 78 denote P, V (= constant), and T (= constant), then, the equation $\text{PV = nRT}$ (n: molecular number of helium gas and R; constant) holds for the helium gas, but when the pressure change ΔP is, for example, positive since P is proportional to n in the above equation, the introducing amount of helium gas increases and the reading of the helium gas in the exhaust gas becomes higher than the actual value, and the low exhaust gas flow rate is indicated, or on the contrary, if the pressure variation is negative, the helium introducing volume decreases in proportion to this variation, then the reading of helium gas in the exhaust gas becomes lower than the actual value, and as exhaust gas flow rate, a higher value is obtained.
(3) Because in FIG. 23, while the inside diameter of exhaust pipe 74a is as large as 100 mm, that of the pipe 75 for introducing helium gas is about 4 mm, and this pipe 75 is inserted in such a manner to simply cross at right angles the flowing direction of exhaust gas with respect to the exhaust gas 74a, mixing of the exhaust gas G from the engine with helium gas TG does not always take place satisfactorily, and consequently, errors occur in the helium gas concentration measurement results by the trace gas analyzer 78, and there has been an inconvenience in that the measurement accuracy of the exhaust gas flow rate is not always satisfactory.
   On the other hand, with respect to the sensitivity calibration method, conventionally, pure nitrogen gas (N₂) is used for zero gas, and at the same time, a mixture of several tens to several thousands ppm helium gas is added with pure N₂ as base for span gas is used for zero calibration and span Calibration of the trace gas analyzer, and the problems shown in Paragraph (4) existed.
(4) Because no consideration was given to carbon dioxide (CO₂) contained in a large quantity next to N₂ in the exhaust gas and calibration was carried out, the sensitivity change and the desired sensitivity calibration was unable to be carried out.

### SUMMARY OF THE INVENTION

This invention is to solve the above-mentioned problems (1) through (4). That is, it is an object of the present invention to provide an exhaust gas flow rate measuring equipment of internal combustion engine,
(a) which can measure the desired exhaust gas flow rate minimizing time lag for other gas analyzer,
(b) which can reduce the sensitivity change as much as possible, and
(c) which enables the exhaust gas to reliably mix with the trace gas and can accurately measure the exhaust gas flow rate.
   In addition, it is a further object of this invention to provide an excellent process for calibrating the sensitivity of a trace gas flow meter
(d) which can reduce the sensitivity change as much as possible.
   To solve this object the present invention provides an exhaust gas flow rate measuring equipment of internal combustion engines as specified in claims 1, 2 and 5 and a sensitivity calibration process as specified in claim 9. Preferred embodiments of the invention are described in the subclaims.

### BRIEF DESCRIPTION OF THE DRAWINGS

FIG. 1 schematically shows one example of the exhaust gas analyzing equipment incorporating an exhaust gas flow measuring equipment of the internal combustion engine of the first embodiment according to first and second modifications of the invention;
FIG. 2 schematically shows one example of the trace gas analyzer used for the said measuring equipment;
FIG. 3 shows the essential portion of the second embodiment in the first and the second modifications;
FIG. 4 schematically shows one example of the exhaust gas analyzing equipment incorporating an exhaust gas flow measuring equipment of the internal combustion engine of the first embodiment according to third and fourth modifications of the invention;
FIG. 5 schematically shows one example of the trace gas analyzer used for the measuring equipment of the first embodiment according to the third and fourth modifications;
FIG. 6 shows the essential portion of the second embodiment of the third and the fourth modifications;
FIG. 7 schematically shows the whole configuration of the exhaust gas flow rate measuring equipment of the internal combustion engine pertaining to the first embodiment according to a fifth modification of the invention;
FIG. 8 is a perspective view which shows an enlarged view of the trace gas introducing portion in the exhaust gas flow rate measuring equipment of the internal combustion engine of the first embodiment according to the fifth modification;
FIG. 9(A) schematically shows a view as seen from a direction A of an arrow mark in FIG. 8;
FIG. 9(B) schematically shows a view as seen from a direction B of an arrow mark in FIG. 8;
FIG. 10 schematically explains the operation of the first embodiment according to the fifth modification;
FIG. 11(A) is a cross-sectional view of the essential portion showing the second embodiment in the fifth modification;
FIG. 11(B) schematically explains the operation of the second embodiment in the fifth modification;
FIG. 12 is a cross-sectional view of an essential portion showing a third embodiment in the fifth modification;
FIG. 13 shows other locating form of the housing according to the fifth modification;
FIG. 14(A) shows simulation indicating the mixing condition of the exhaust gas and trace gas when a triangle pole is arranged in the fifth modification;
FIG. 14(B) and (C) schematically show the arrangement condition of the triangle pole in the fifth modification;
FIG. 15(A) shows simulation indicating other mixing condition of the exhaust gas and trace gas when a triangle pole is arranged in the fifth modification;
FIG. 15(B) and (C) schematically show other arrangement condition of other triangle poles in the fifth modification;
FIG. 16(A) shows simulation indicating other mixing condition of the exhaust gas and trace gas when a triangle pole is arranged in the fifth modification;
FIG. 16(B) schematically shows the arrangement condition of the triangle poles in the fifth modification;
FIG. 17(A) shows simulation indicating the mixing condition of the exhaust gas and trace gas when the arrangement of a triangle pole is changed in the fifth modification;
FIG. 17(B) schematically shows when the arrangement condition of the triangle poles is changed in the fifth modification;
FIG. 18(A) shows simulation indicating the mixing condition of the exhaust gas and trace gas when a quadrangle pole is arranged in the fifth modification;
FIG. 18(B) schematically shows the arrangement condition of the quadrangle pole in the fifth modification;
FIG. 19 schematically shows one example of the exhaust gas analyzing equipment to which the sensitivity calibration process of the trace gas flow meter according to sixth and seventh modifications of the invention is applied;
FIG. 20 schematically shows one example of the trace gas analyzer used for the said exhaust gas analyzing equipment in the sixth and the seventh modifications;
FIG. 21 shows the output of the analyzer when CO₂ is mixed in span gas and when CO₂ is not mixed in the sixth and the seventh modifications;
FIG. 22 explains the conventional technique; and
FIG. 23 explains the conventional technique.

### DETAILED DESCRIPTION OF THE PREFERRED EMBODIMENTS

Because in the first and the second modifications of the invention, tubing with a suitable inside diameter such as capillary is used for a member to connect the gas sampling passage to the trace gas analyzer, the sample gas of a specified flow rate can be supplied to the trace gas analyzer, and at the same time, the dead volume at the connections can be reduced as much as possible, and delay in response caused by the dead volume can be reduced. Consequently, time lag with other gas analyzer connected to the gas sampling passage can be minimized. Consequently, the problem shown in Paragraph (1) above can be solved.

Because in the third and the fourth modifications of the invention, the gas sampling passage is connected to the trace gas analyzer via a porous thin film which practically permeates helium gas only as trace gas and the atomic weight of helium is far different from that of the substance existing in the exhaust gas, the introduction of unrequired exhaust gas component can be prevented and helium gas only can be practically supplied to the trace gas analyzer. Consequently, the condition in that the trace gas analyzer inside which is held to the high vacuum state causes pressure fluctuation due to the viscosity of the exhaust gas and the introduction rate of helium gas is varied in proportion to this fluctuation rate can be prevented. Consequently, the problem shown in Paragraph (2) above in that the sensitivity varies in accordance with the gas component ratio in the exhaust gas can be solved.

Because in the fifth modification of the invention, a suitable turbulence occurs downstream from the introduction point of trace gas into the exhaust pipe and the exhaust gas is mixed with the trace gas surely and thoroughly, the exhaust gas flow rate can be accurately measured. And both end portions of the housing may be brought in contact with the inner wall of the exhaust pipe but they may be kept apart a suitable distance from the inner wall. In this case, a large turbulence can be generated downstream from the introduction point of trace gas with pressure drop suppressed, and the trace gas and the exhaust gas can be efficiently mixed. Consequently, the problem shown in Paragraph (3) above can be solved.

In the fifth modification, the cross-section profile of the tube in the flow direction of the exhaust gas may be designed to be symmetrical such as isosceles triangle, but may be designed to be asymmetric triangle or locate symmetrical triangles such as isosceles triangles to arrange asymmetrically so that a large turbulence such as Lancaster eddies generated by, for example, the pressure difference can be generated, and the trace gas and the exhaust gas can be mixed more efficiently. In addition, in the fifth modification, the cross-sectional profile of the tube is not limited to the said triangle but may be quadrangle or hexagon, and in these cases, an asymmetrical form can generate larger turbulence.

Because in the sixth and the seventh modifications of the invention, calibration is carried out with care taken on CO₂ which is contained in a large quantity next to N₂ in the exhaust gas, it is possible to suppress the sensitivity change to a low level, and the desired calibration can be surely carried out. Consequently, the problem shown in Paragraph (4) above can be solved.

Examples of internal combustion engines according to the first through the seventh modifications include motors and boilers in addition to automobile engines.

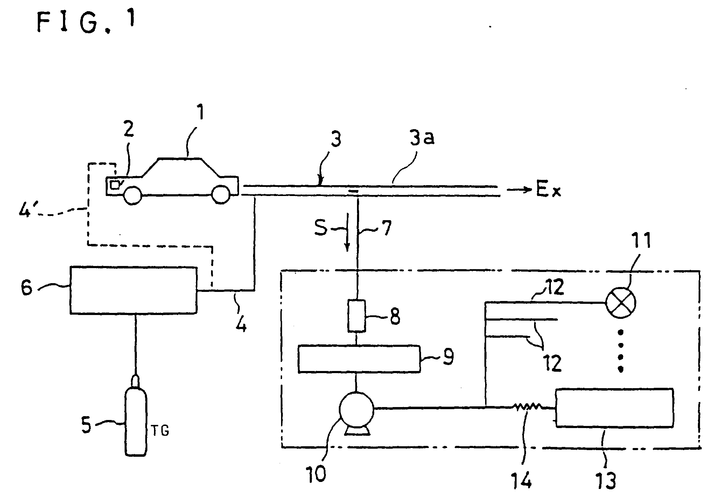

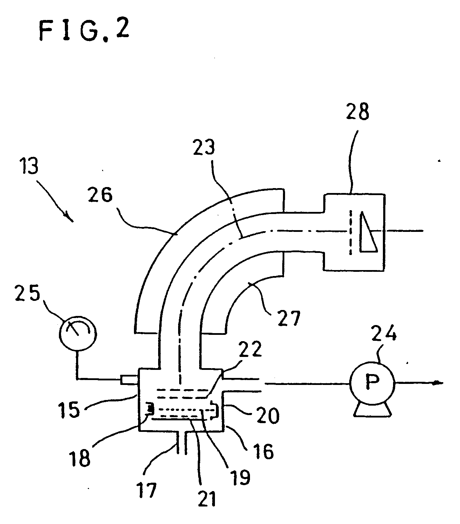

FIG. 1 and FIG. 2 show the first embodiment according to the first modification.

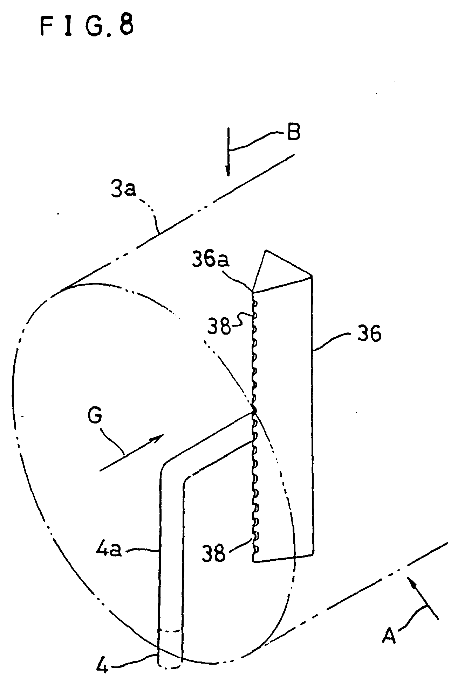

First of all, in FIG. 1, numeral 1 designates an automobile, numeral 2 the engine, numeral 3 an exhaust passage linked to a tale pipe connected to the engine 2. This exhaust passage 3 comprises an exhaust pipe 3a (see, for example, FIG. 8 to FIG. 10). Numeral 4 designates a trace gas supply passage connected to an exhaust passage 3, and upstream the trace gas supply path 4, a gas cylinder 5 containing pure helium gas as trace gas is installed, and on the downstream side, a mass flow controller 6 that has both functions to measure and to control the gas flow rate is installed. The reason why helium gas is used as trace gas is that the atomic weight of helium of the substance existing in the exhaust gas is far different from that of the substance existing in the exhaust gas as compared to other inert gas such as argon.

Numeral 7 designates the gas sampling passage connected to the exhaust passage 3, which directly samples the exhaust gas undiluted with diluting gas such as air, and to this gas sampling passage 7, for example, the equipment and apparatus as follows are connected. That is, numeral 8 designates the filter, numeral 9 designates a dehumidifier such as electronic cooling device, numeral 10 designates a suction pump. To the gas sampling passage 7 downstream of this suction pump 10, a plurality of gas analyzers 11 are installed via branch passages 12 in parallel to one another, and it is designed to properly measure the components contained in the exhaust gas such as CO, CO₂, NOₓ, or HC, an at the same time, the trace gas analyzer 13 is connected to the gas sampling passage 7 via capillary 14 with suitable inside diameter. Examples of the tube include the capillary 14 comprising, for example, glass, with their inside diameter is on the order of, for example, 0.03 m to 0.5 mm. For the trace gas analyzer 13, for example, a Sectorfield mass spectrometer is used for measure the concentration of helium gas, which is a trace gas. By the way, Eₓ designates the exhaust gas which is not taken into the gas sampling passage 7 as sample gas S.

FIG. 2 schematically shows one example of the trace gas analyzer 13, and in this figure, numeral 15 designates the ion source, and inside the container 16 held to high vacuum, filament 18 and a collector electrode 20 for collecting electron 19 generated when the filament 18 is heated are oppositely placed on the gas inlet 17 side coupled to the capillary 14, and at the same time, ion press-out electrode 21, pull-out electrode 22, etc. are mounted to generate ion 23. Numeral 24 designates an exhaust pump for evacuating the container 16 to high vacuum, and numeral 25 is a pressure gauge.

Numeral 26 designates an analyzer portion linked to the ion source 15, where a magnet 27 is installed to generate the magnetic field, and is configured to allow the helium ion only to pass. Numeral 28 designates an ion collector for collecting ion 23 passing the analyzer portion 26. The ion current obtained at this ion collector 28 is displayed as data on a recorder such as electromagnetic oscillograph or pen recorder via PRE AMP and MAIN AMP which are not illustrated.

By the way, the output signals from a mass flow controller 6, gas analyzer 11, and trace gas analyzer 13 are designed to be inputted into the processor and control unit such as microcomputer, though not illustrated.

In the exhaust gas analyzing equipment of the above-mentioned configuration, the exhaust gas from the engine 2 of the automobile 1 leads to the exhaust passage 3. And the helium gas whose flow rate is adjusted to this exhaust gas by the mass flow controller 6 at the upstream side of the exhaust passage 3 is introduced as trace gas. The introduction rate in this event is inputted to the processor and control unit.

And part of the exhaust gas with helium gas mixed is taken into the gas sampling passage 7 as sample gas S. The sample gas S taken into the gas sampling passage 7 leads to the dehumidifier 9 via the filter 8, where it is dehumidified as required. The sample gas S after this dehumidifying treatment is supplied to gas analyzers 11 mounted, respectively, to branch passages 12 in parallel to one another via the suction pump 10 as well as to the trace gas analyzer 13 via the capillary 14.

In the gas analyzer 11, various components contained in the sample gas S are analyzed, respectively, and the results are transmitted to the processor and control unit. In the trace gas analyzer 13, the concentration of helium gas is determined, and this concentration value is also transmitted to the processor and control unit.

On the other hand, in the mass flow controller 6, since the introduction rate of helium gas as trace gas is obtained, and this is sent to the processor and control unit, it is possible to obtain the exhaust gas flow rate in real time by dividing this helium gas introducing rate by the helium gas concentration.

As described above, because the exhaust gas flow rate measuring equipment of the internal combustion engine in the above-mentioned embodiments uses the capillary 14 for a member to connect the gas sampling passage 7 for directly sampling the exhaust gas from the engine 2 to the trace gas analyzer 13, it is not only possible to feed a specified flow rate of sample gas S to the trace gas analyzer 13, but also the dead volume can be reduced as much as possible and the delay of response caused by this can be reduced. Consequently, the time lag with measurement results in other gas analyzer 11 connected to the gas sampling passage 7 can be eliminated.

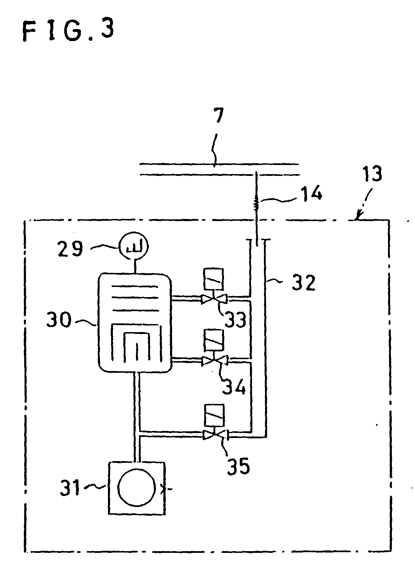

FIG. 3 is the second embodiment according to the first modification showing another mode for taking in the sample gas S into the trace gas analyzer 13. In FIG. 3, numeral 29 is a mass spectrometer, to which a turbo-molecular/drag pump 30 and rotary pump 31 are connected in series. And numeral 32 is a sampling port linked to the capillary 14. Numerals 33, 34, 35 are open/close valve intermediately installed between the sample port 32 and the center position of the turbo molecular/drag pump 30, between the sample port 32 and the turbo molecular/drag pump 30 bottom, and between the sampling port 32 and the turbo molecular/drag pump 30 and rotary pump 31.

In the equipment configured in this way, the following effects are achieved in addition to the effects of the above-mentioned embodiments. That is, pressure of the sampling port 32 is variable from as low as 13,3 Pa (0,1 Torr) pressure condition to the range of atmosphere, and the mass spectrometer 29 changes over the open/close valves 33-35 at the inlet port leading to the chamber in accordance with the said pressure. Because the relevant helium gases have a high diffusion coefficient, the helium molecule can move in the reverse direction in the turbo molecular/drag pump 30, while it prevents other gas component from entering the mass spectrometer 29. In addition, as described above, since the variable pressure range in wide, even if the capillary 14 of optional length is used, no error is generated in the measurement of the trace gas analyzer 13, which is very suitable for collecting samples of the exhaust gas.

In each of the above-mentioned first and second embodiments helium gas as trace gas is designed to mix into the exhaust gas flowing the exhaust passage 3 downstream of the engine 2, but it may be configured as shown in the second modification as follows. That in, in the second modification, the trace gas supply passage 4 is connected to the engine 2 as shown with a virtual line 4' in FIG. 1. In this event, as compared to the above-mentioned embodiment, the volume from the engine 2 to the tail pipe becomes a dead volume, increasing the time lag.

In each of the above-mentioned embodiments, for example, as the trace gas, any inert gas other than helium gas may be used, and for the trace gas analyzer 13, various mass spectrometers such as quadruple mass spectrometer, etc. may be used in addition to the sector field mass spectrometer.

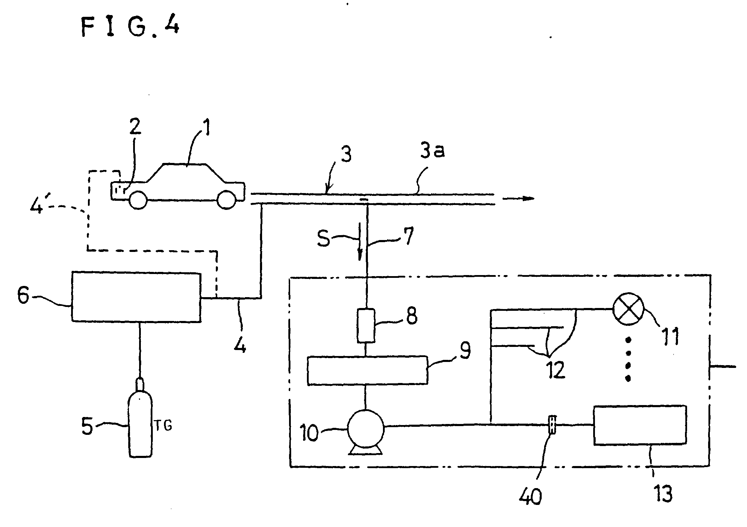

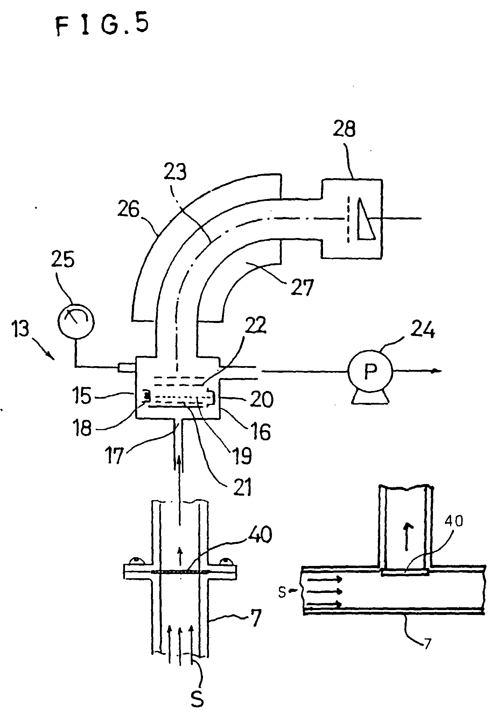

FIG. 4 and FIG. 5 show the first embodiment according to the third modification in which the gas sampling passage 7 and trace gas analyzer 13 are connected via the porous thin film 40 which practically penetrates inert gas helium gas only as trace gas. By the way, in FIG. 4 and FIG. 5, like reference characters used in FIG. 1 and FIG. 2 designate like or corresponding parts throughout. Fig. 5 shows two different variations of arrangement of the film 40 in the passage 7.

The said porous thin film 40 is made from polytetrafluoroethylene, and the inventors have confirmed that the use of this porous thin film 40 penetrates helium. This is assumed that the porous thin film 40 comprising polytetrafluoroethylene prevents entry of unrequired exhaust gas component and supply helium gas only to the trace gas analyzer 13.

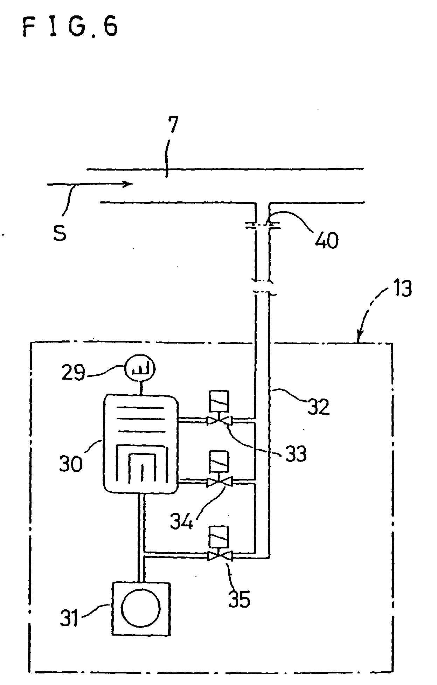

FIG. 6 shows the second embodiment according to the third modification indicating the other mode of taking in the sample gas S into the trace gas analyzer 13 when the said porous thin film 40 is used. In FIG. 6, like reference characters used in FIG. 1 through FIG. 5 designate like or corresponding parts throughout.

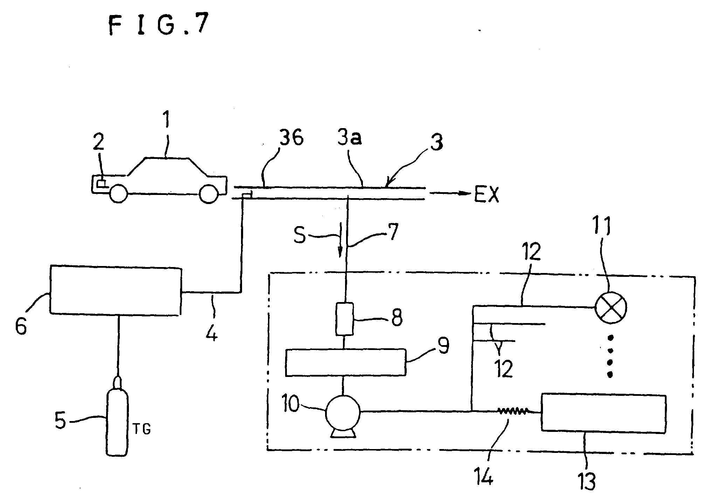

FIG. 7 through FIG. 10 show the first embodiment according to the fifth modification. In FIG. 7 through FIG. 10, like reference characters used in FIG. 1 through FIG. 6 above designate like or corresponding parts throughout.

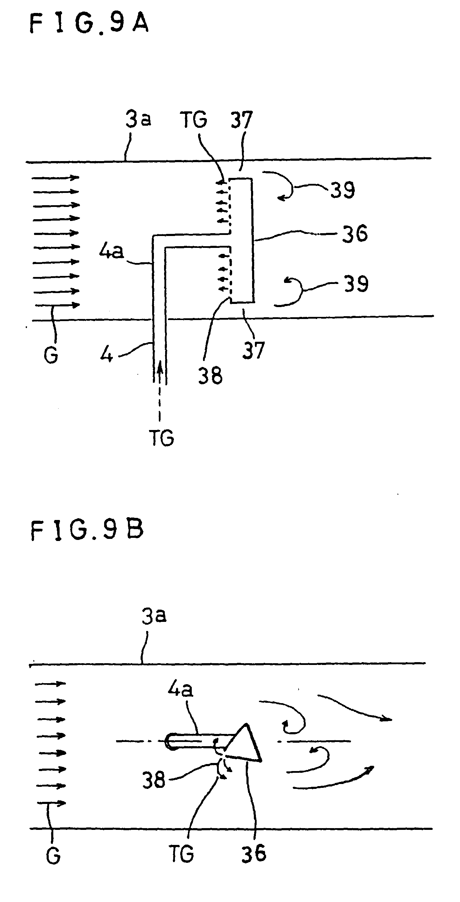

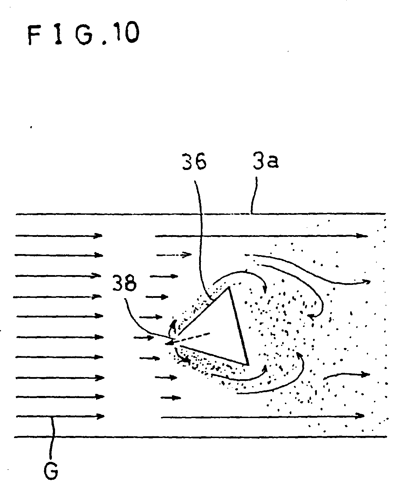

FIG. 7 through FIG. 9 shows one example of the configuration for introducing the helium gas TG into the exhaust pipe 3a as trace gas. That is, FIG. 8 is a perspective view of the relevant portion, FIG. 9 (A) is a schematic representation as seen from the arrow mark A direction in FIG. 8, and FIG. 9 (B) is a schematic representation as seen from the arrow mark B direction (direction crossing arrow A at right angles) in FIG. 8. FIG. 10 schematically shows the blowout condition of helium gas TG.

In FIG. 8 and FIG. 9, numeral 4a designates the head end portion of the trace gas introducing pipe 4, which is inserted in the exhaust pipe 3a, and the top end portion 4a is bent in an L-letter shape along the flow of the exhaust gas G. To this top end portion 4a, a tube 36 for blowing out the trace gas with a triangle pole for the outside profile and with a gas passage inside is placed to cause its longitudinal direction to cross the exhaust gas G flowing direction at right angles, and its both end portions to be separated a suitable distance from the inner wall of the exhaust pipe 3a. Numeral 37 shows a clearance between the said both end portions and the inner wall of the exhaust pipe 3a.

The cylinder 36 has an asymmetric triangle cross-sectional profile as seen from the arrow B direction as shown in FIG. 9 (B) and FIG. 10, and one of the vertices 36a is located on the upstream side (direction in which exhaust gas G flown), and to this vertex 36a, a plurality of holes 38 for trace gas blow-out are opened in the longitudinal direction. And to one of the outer surfaces of the cylinder 36, the head end portion 4a of the trace gas introducing pipe 4 is connected in free communication.

In the equipment of the above-mentioned configuration, the exhaust gas from the engine 2 of the automobile 1 leads to the exhaust pipe 3a. And for this exhaust gas, at the upstream side of the exhaust pipe 3a, helium gas TG whose flow rate is adjusted by the mass flow controller 6 leads to the tube 36 via the trace gas introducing pipe 4, and from the blow out hole 38 of this tube 36, it is blown out into the exhaust pipe 3a and introduced into the exhaust pipe 3a. The introduction rate at this moment is measured by the mass flow controller 6 and inputted to the processor and control unit.

Since in the said exhaust pipe 3a, a tube 36 asymmetric to the flow of the exhaust gas G is installed in such a manner that both end portions in the longitudinal direction do not come in contact with the inner wall of the exhaust pipe 3a, as schematically shown in FIG. 10, a turbulence occurs in the exhaust gas G at the downstream side of the tube 36, and helium gas TG blown out to the exhaust pipe 3a via the blow out hole 38 opened on the upstream side of the tube 36 is thoroughly mixed with the exhaust gas G in the turbulent condition. That is, while helium gas TG is being blown out from the blow out hole 38 installed upstream of the tube 36, the exhaust gas G generates a turbulence downstream of the tube 36 by the tube 36 being installed asymmetrically to the flow of the exhaust gas G, and at the same time, the exhaust gas G passing a slight clearance between the tube 36 and the exhaust pipe 3a flows to the center direction of the exhaust pipe 3a, thereby generating an eddy 39 as shown in FIG. 9 (A), and the exhaust gas G is thoroughly mixed with helium gas TG. And in this event, pressure loss caused by blow-out of the helium gas TG is little and the flow rate fluctuation of helium gas TG is little, and the flow rate can be easily controlled.

As described above, part of the exhaust gas G thoroughly mixed with the helium gas TG is taken into the gas sampling passage 7 as sample gas S. The sample gas S taken into the gas sampling passage 7 leads to the dehumidifier 9 via the filter 8 and is dehumidified as required. The sample gas S after this dehumidifying treatment is supplied to the gas analyzers 11 installed, respectively, to the branch passages 12 in parallel to one another via the suction pump 10, and at the same time supplied to the trace gas analyzer 13 via the capillary 14.

And in the gas analyzer 11, various kinds of components contained in the sample gas S are analyzed, respectively, and the results are transmitted to the processor and control unit. At the trace gas analyzer 14, the concentration of helium gas TG is determined, and this concentration value is also transmitted to the processor and control unit.

On the other hand, since in the mass flow controller 6, the introduction rate of helium gas TG as trace gas is obtained, and this is transmitted to the processor and control unit, by dividing this helium gas introducing rate by the helium gas concentration, it is possible to obtain the exhaust gas flow rate in real time.

In the above-mentioned embodiment, the cross-sectional profile of the tube 36 is asymmetric triangle and this is installed asymmetrically to the flow of the exhaust gas G, but the cross-sectional profile may be symmetric as the tube 36, for example, isosceles triangle, and the tube 36 of this kind of cross-sectional profile may be installed asymmetrically or symmetrically to the flow of the exhaust gas G. The position of the blow-out hole 38 in the tube 36 may not be limited to the upstream side of the tube 36 but may be located at any suitable position such as at the downstream side or on the side.

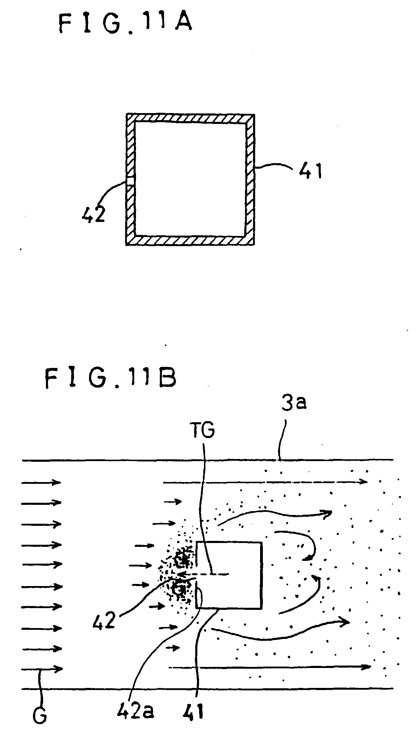

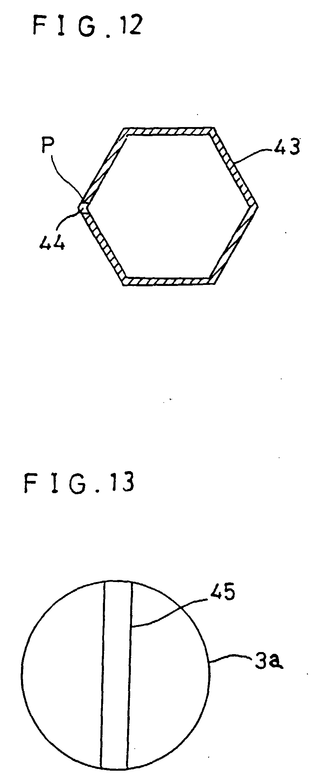

As described above, the first embodiment according to the fifth modification has a triangle cross-sectional profile of the tube 36 but the fifth modification shall not be limited to this but may be formed in a quadrangle or hexagon. Referring now to FIG. 11 and FIG. 12, description will be made on these.

First of all, FIG. 11 shows the second embodiment according to the fifth modification, and in FIG. 11 (A), numeral 41 designates a tube with a suitable length, and the cross-sectional profile is a quadrangle, more specifically, a square. On one side of this tube 41, though it is not illustrated in detail, a plurality of blow-out holes 42 are opened in the longitudinal direction. This kind of tube 41 is placed symmetrically to the flow of the exhaust gas G so that the side 42a forming the blow-out hole 42 is located on the upstream side as shown in FIG. 11 (B). In this event, both end portion of the tube 41 is recommended not to be in contact with the inner wall of the exhaust pipe 3a.

In this way, in the tube 41 whose cross-sectional profile is a square, as shown in FIG. 11 (B), a turbulence is generated in the exhaust gas G downstream of the tube 41, and the helium gas TG blown out to the exhaust pipe 3a via the blow-out hole 42 opened upstream of the tube 41 is thoroughly mixed with the exhaust gas G in the turbulent condition. That is, while the helium gas TG is blown out from the blow-out hole 42 located upstream of the tube 41, the exhaust gas G generates a turbulence downstream of the tube 41 by the tube 41 being arranged asymmetrically to the flow of the exhaust gas G, and the exhaust gas G passing a slight clearance between the tube 41 and the exhaust pipe 3a flows to the center direction of the exhaust pipe 3a, thereby generating an eddy as in the case of FIG. 9 (A), and the exhaust gas G and helium gas TG are thoroughly mixed. And in this case, pressure loss caused by blow-out of the helium gas TG is little and the flow rate fluctuation of the helium gas TG is little, and the flow rate can be easily controlled.

In the second embodiment according to the fifth modification, it is needless to say that the tube 41 may be arranged to be asymmetrical to the flow of the exhaust gas G. The cross-sectional profile of the tube 41 may be a rectangle or a trapezoid, or further a simple quadrangle. And in the case of the tube 41 with rectangular cross-sectional profile, this tube 41 is preferably arranged to be symmetrical to the flow of the exhaust gas G. The position of the blow-out hole 42 in the tube 41 shall not be limited to the upstream side of the tube 41 but may be located at a suitable position on the downstream side or on the side.

FIG. 12 shows the third embodiment in the fifth modification In FIG. 12, numeral 43 in a tube whose cross-sectional profile is a regular hexagon. And at one vertex P of thin tube 43, a plurality of blow-out hole 44 are opened in the longitudinal direction. The tube 43 configured in this way is placed in the exhaust pipe 3a so that the blow-out hole 44 is located on the upstream side. The action and the effect when arranged in this way are same as those of the first embodiment or the second embodiment according to the fifth modification, and their detailed explanation will be omitted. In this third embodiment, too, it is needless to say that the tube 43 may be arranged to be asymmetrical to the flow of the exhaust gas G. For the cross-sectional profile of the tube 43, it may be a simple hexagon. In addition, the position of the blow-out hole 44 in the tube 43 is not limited to the upstream side of the tube 43 but may be located at any position such as on the downstream side or on the side.

Now, in the first through the third embodiments according to the fifth modification, the reason why the cross-sectional profile of the tubes 36, 41, 43 is designed to be a triangle, quadrangle, and hexagon, respectively, is that the fabrication of the tubes 36, 41, 43 of these profiles is easy. For the tube, the cross-sectional profile may be a polygon larger than the septangle, but in this kind of profile, as compared to the conventional technique shown in FIG. 23, a turbulent is likely to occur and helium gas TG can be thoroughly mixed with the exhaust gas G, but it is assumed that those described in each of the embodiments above achieve better mixing effects.

In each of the embodiments described above according to the fifth modification, the tube 36, 41, 43 in arranged in such a manner to form a slight clearance between the both end portions in the longitudinal direction and the inner wall of the exhaust pipe 3a, but as shown in FIG. 13, both end portions of the tube 45 may be designed to come in contact with the inner wall of the exhaust pipe 3a. In this event, on the inner wall side of the exhaust pipe 3a, Lancaster eddies are difficult to be generated and the turbulent effects slightly decrease, but still, helium gas TG can be thoroughly mixed with the exhaust gas G.

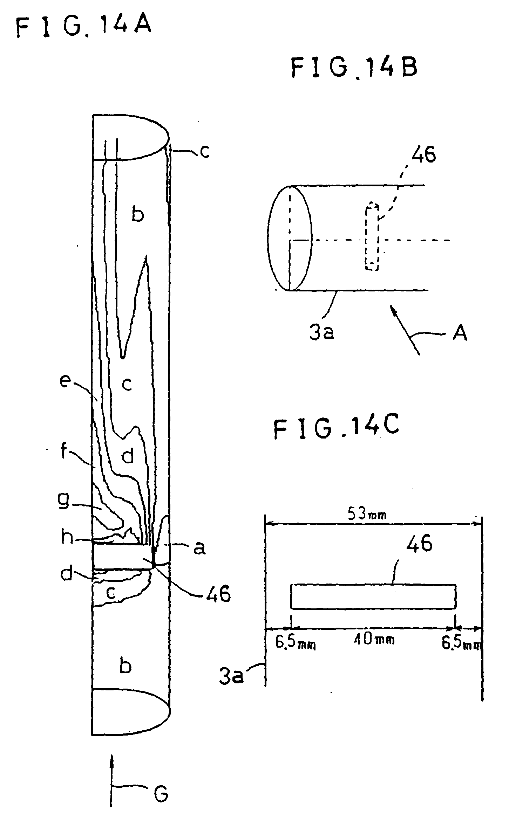

FIG. 14 through FIG. 18 show the simulation results using a computer of the condition when the trace gas TG is mixed into the exhaust gas G in each of the above embodiments according to the fifth modification. In the following description, the inside diameter of the exhaust pipe 3a is assumed to be 53 mm, the flow rate of the exhaust gas G flowing in this is assumed to be 2000 L/min, and the Reynolds number is assumed to be constant. The reference characters a through i in each figure show the area classified by the flow velocity, and the reference character "a" indicates the fastest area, and thereafter the flow velocity is decreased stepwise.

First of all, FIG. 14 (A) shows a simulation indicating the mixing condition of the exhaust gas G and the trace gas TG around a 40-mm-long triangle pole 46 when the triangle pole 46 is positioned in such a manner that both end portions do not come in contact with the inner wall of the exhaust pipe 3a as shown in FIG. 14 (B), (C), and the exhaust pipe 3a is shown only one half because it is cylindrical.

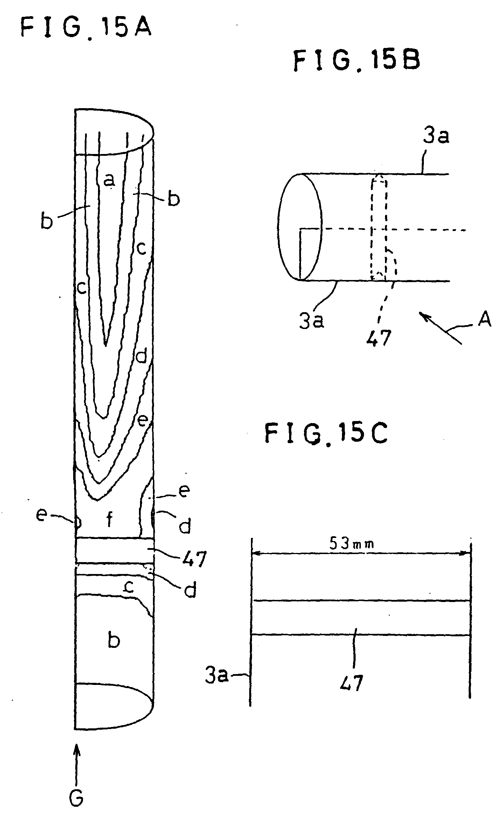

FIG. 15 (A) shows a simulation indicating the mixing condition of the exhaust gas G and the trace gas TG around a triangle pole 47 when a 53-mm-long triangle pole 47 is positioned in such a manner that both end portions come in contact with the inner wall of the exhaust pipe 3a and are arranged to be asymmetrical to the flow of the exhaust gas G as shown in FIG. 15 (B), (C), and the exhaust pipe 3a is shown only one half because it is cylindrical.

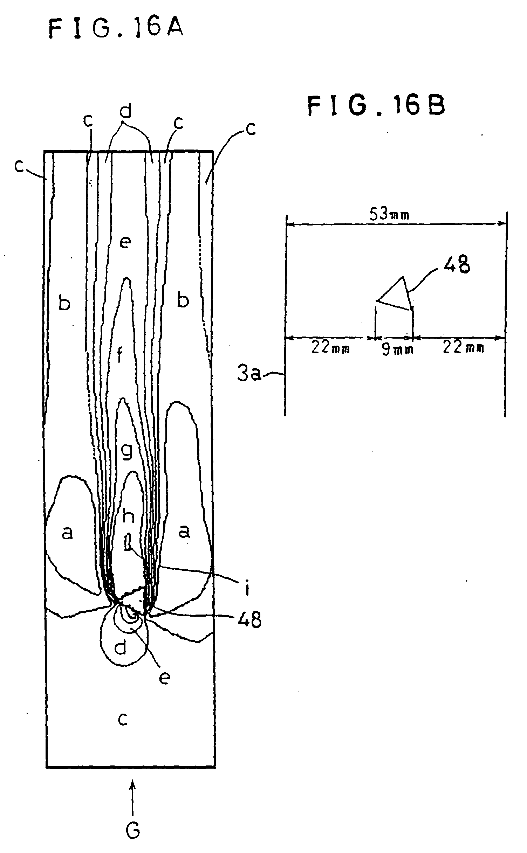

FIG. 16 (A) is a simulation indicating the mixing condition of the exhaust gas G and the trace gas TG around a triangle pole 48 when a 53-mm-long triangle pole 48 whose cross-sectional profile is isosceles triangle is positioned in such a manner that both end portions come in contact with the inner wall of the exhaust pipe 3a and are arranged to be asymmetrical to the flow of the exhaust gas G as shown in FIG. 16 (B).

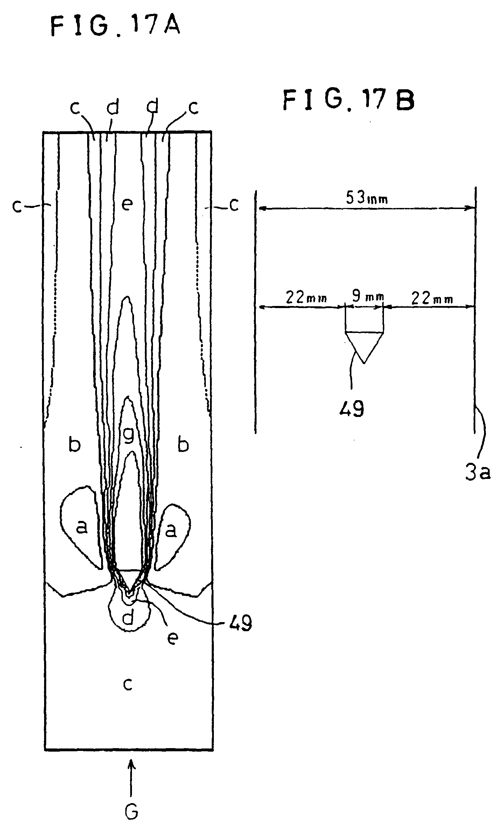

In addition, FIG. 17 (A) is a simulation indicating the mixing condition of the exhaust gas G and the trace gas TG around a triangle pole 49 when a 53-mm-long triangle pole 49 whose cross-sectional profile is equilateral triangle is positioned in such a manner that both end portions come in contact with the inner wall of the exhaust pipe 3a and are arranged to be symmetrical to the flow of the exhaust gas G as shown in FIG. 17 (B).

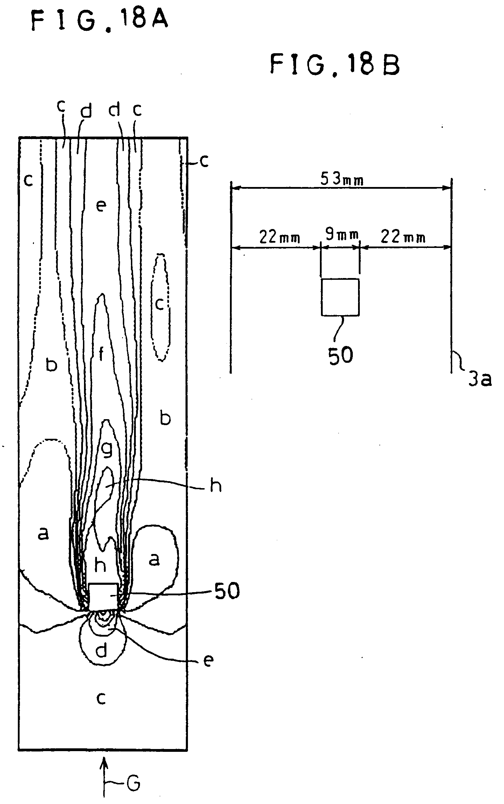

Furthermore, FIG. 18 (A) is a simulation indicating the mixing condition of the exhaust gas G and the trace gas TG around a square pole 50 when a 53-mm-long square pole 50 whose cross-sectional profile is square is positioned in such a manner that both end portions come in contact with the inner wall of the exhaust pipe 3a and are arranged to be symmetrical to the flow of the exhaust gas G as shown in FIG. 18 (B).

In FIG. 14 through FIG. 17 above, the blow-out hole of the trace gas TG is assumed to be located at the vertex on the upstream side, while in FIG. 18, it is assumed to be located on the side on the upstream side.

FIG. 14 (A) and FIG. 15 (A) above show the flow velocity distribution when the triangle pole tube 46, 47 are positioned not in contact and in contact with the inner wall of the exhaust pipe 3a, and these figures suggest that the mixing of the exhaust gas G and the trace gas TG is more promoted when the tube 46 is positioned not in contact with the inner wall of the exhaust pipe 3a. This is assumed to be similar not only when the tube cross-section is triangle but also when it is other polygon.

FIG. 16 (A), FIG. 17 (A), and FIG. 18 (A) show the flow velocity distribution when the cross-sectional profile of the triangle pole tube 48, 49, and quadrangle pole tube 50 is positioned to be symmetrical or asymmetrical to the flow of the exhaust gas G in the exhaust pipe 3a, and these figures suggest that the mixing of the exhaust gas G and the trace gas TG is more promoted when the said cross-sectional profile is positioned to be asymmetrical. And the said mixing can be more promoted with the tube 50 whose cross-sectional profile is a quadrangle pole than the tube 48, 49 with a triangle pole cross-sectional profile, but the pressure loss increases upstream with respect to the flow of the exhaust gas G.

This fifth modification shall not be limited to each of the embodiments described above, but for example, for the trace gas, any inert gas other than helium gas may be used, but helium gas is the most preferable. This is because the atomic weight of helium is far different from that of the substance existing in the exhaust gas G. For the trace gas analyzer 13, various mass spectrometers such as quadruple mass spectrometer, etc. may be used in addition to the sector field mass spectrometer.

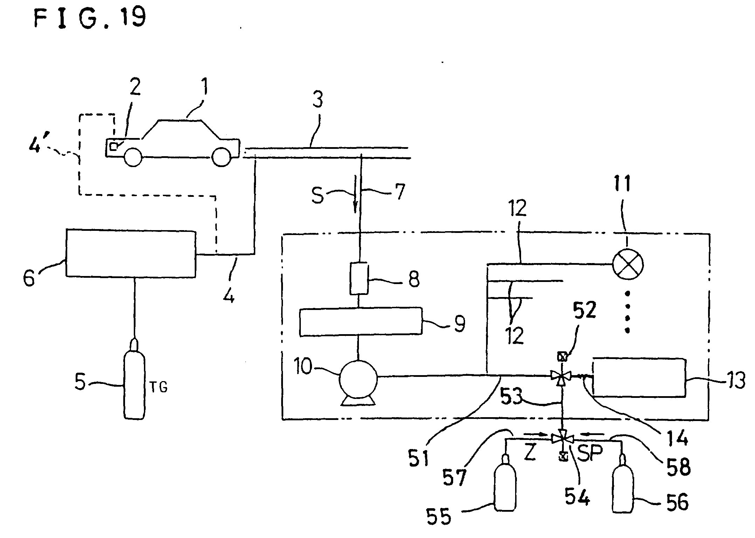

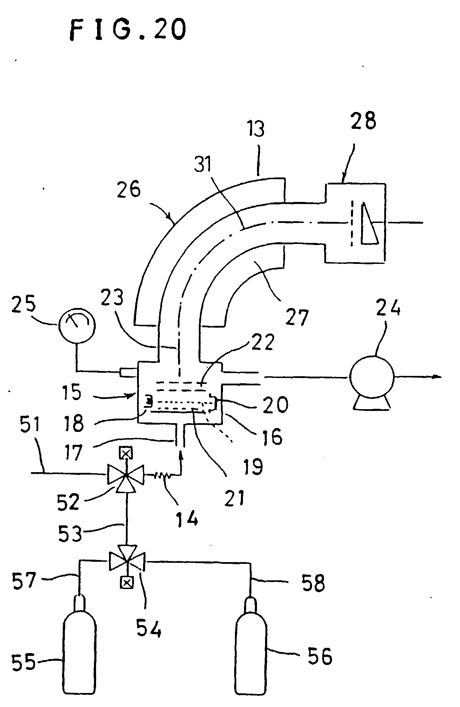

FIG. 19 and FIG. 20 schematically shows one example of the exhaust gas analyzing equipment to which the sensitivity calibration process of the trace gas flow meter according to the sixth modification can be applied. In FIG. 19 and FIG. 20, like reference characters designate like or corresponding parts throughout.

In FIG. 19 and FIG. 20, to the gas sampling passage 7 downstream of the suction pump 10, a plurality of gas analyzer 11 are installed via branch passages 12 connected in parallel to one another, and are configured to suitably measure the component contained in the exhaust gas such as CO, CO₂, NOₓ or HC, while the trace gas analyser 13 is connected to the downstream end of the branch passage 51 in parallel to the branch passage 12.

Numeral 52 is a passage selector valve comprising, for example, three-way solenoid valve, located at the branch passage 51, to one port of which the trace gas analyzer 13 is connected via the capillary 14 about 30 µm in inside diameter, and to the other port of which a calibration gas supply passage 53 is connected. At the end portion of this calibration gas supply passage 53, a passage selector valve 54 comprising, for example, a three-way solenoid valve is connected, and to this passage selector valve 54, gas cylinders 55, 56 containing zero gas and span gas, respectively are connected via the passages 57, 58, respectively.

And for the zero gas Z and span gas SP contained in the said cylinders 55, 56, respectively, the gas mixed with CO₂ contained in a large quantity next to N₂ in the exhaust gas of automobile 1 at the concentration level similar to that in the exhaust gas is used. For the zero gas Z, with N₂ used as a base, the gas mixed with CO₂ in such a manner that the concentration becomes about 15% is used. For the span gas SP, with N₂ used as a base, gas, to which some tens of to ten thousands of ppm of helium are added and the gas mixed with CO₂ in such a manner that the concentration becomes about 15%, is used.

Therefore, when the exhaust gas flow rate is analyzed, the passage selector valve 52 is operated and the branch passage 51 is brought to be in free communication with the capillary 14. And to this exhaust gas, on the upstream side of the exhaust passage 3, helium gas whose flow rate is adjusted by the mass flow controller 6 is introduced as the trace gas. The introduction rate in this event is inputted to the processor and control unit.

Part of the exhaust gas with helium gas mixed is taken into the gas sampling passage 7 as sample gas S. The sample gas S taken into the gas sampling passage 7 leads to the dehumidifier 9 via the filter 8 and is dehumidified as required. The sample gas S after this dehumidifying treatment is supplied to the gas analyzer 11 mounted to branch passages 12 in parallel to one another via the suction pump 10, and at the same time it is also supplied to the trace gas analyzer via the branch passage 51, passage selector valve 52, and capillary 14.

In the gas analyzer 11, various components contained in the sample gas are analyzed, respectively, and the results are transmitted to the processor and control unit. In the trace gas analyzer 13, the concentration of helium gas is determined, and this concentration value is also transmitted to the processor and control unit.

On the other hand, in the mass flow controller 6, the introduction rate of helium gas as trace gas is obtained, and since this is transmitted to the processor and control unit, by dividing this helium gas introduction rate by the helium gas concentration, it is possible to obtain the exhaust gas flow rate in real time.

Next, when the trace gas analyzer 13 is calibrated, the passage selector valve 52 is operated to bring the calibration gas supply passage 53 in free communication with the capillary 14. And the passage selector valve 54 is operated to supply the zero gas Z containing about 15% of CO₂ with N₂ used as base to the trace gas analyzer 13 via the calibration gas supply passage 53, passage selector valve 52, and capillary 14, and the required zero point calibration can, thereby, be carried out. Then, the passage selector valve 54 is operated to supply the span gas SP with several tens of to several thousands of ppm helium gas added with N₂ used as base, to which CO₂ is mixed to achieve about 15% concentration, to the trace gas analyzer 13 via the calibration gas supply passage 53, passage selector valve 52, and capillary 14, and the required span calibration can, thereby, be carried out.

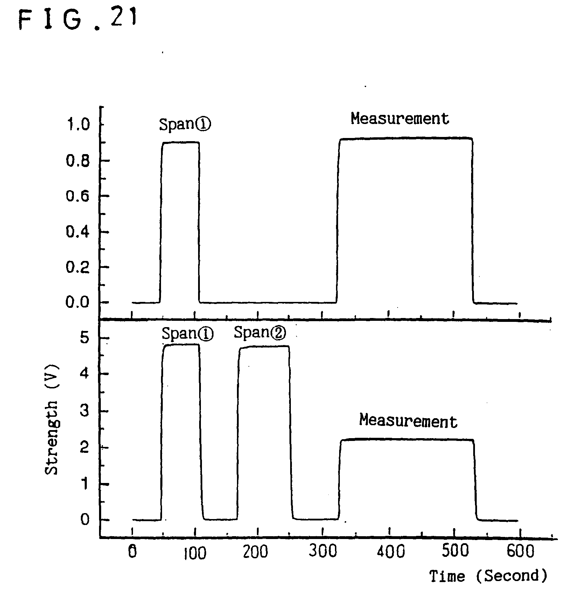

FIG. 21 shows one example of changes of the output signal with time in the CO₂ meter (any one of the gas analyzers shown with reference character 11 in FIG. 1) when 1930 ppm helium gas (span gas, span gas ① used in the sixth invention) with 14.6% CO₂ mixed with N₂ used as a base is used for the span gas, and when 1920 ppm helium gas (span gas, span gas ② used in the conventional technology) with N₂ used as a base is used for the span gas, and the upper column shows the output of the CO₂ meter and the lower column the output of the trace gas analyzer 13.

Now suppose that the concentration of helium gas per unit strength in span gas ① and span gas ② be C₁, C₂, respectively, when calibrated with the span gas ① with no CO₂ mixed, the span gas ② is strength x C₁ = 1880 ppm and when calibrated with the span gas ① with CO₂ mixed, the span gas ① is strength x C₂ = 19700 ppm. That is, when calibrated with the span gas with no CO₂ mixed, there is a problem in that the reading of helium gas in the exhaust gas becomes higher than the actual value, and the reading of the exhaust gas flow rate becomes lower or on the contrary, there is a problem in that the reading of helium gas in the exhaust gas becomes lower than the actual value, and the reading of the exhaust gas flow rate becomes higher. In the sixth modification, as described above, since about 15% of CO₂ is mixed to the span gas used hitherto, the above-mentioned problems are not caused.

When the zero-point calibration is carried out, it is not always necessary to add CO₂ for the zero gas Z and pure N₂ may be designed to be used.

As described above, because for the sensitivity calibration method of the trace gas flow meter according to the sixth modification, the gas containing CO₂ in the concentration similar to that of CO₂ contained in the exhaust gas is used for the zero gas Z and span gas SP used for calibration gas, respectively, the change in the sensitivity can be suppressed as low as possible. In particular, because in the preceding process of the trace gas analyzer 13 to which the said calibration gas is supplied, the capillary 14 same as that used when the sample gas S is introduced to the trace gas analyzer 13 is used, the gas flow rate at the time of calibration can be set to the level same as the gas flow rate at the time of measurement, and highly accurate calibration can be carried out.

In the embodiment described above, helium gas as trace gas is designed to mix with the exhaust gas flowing the exhaust passage 3 downstream of the engine 2, but it may be configured as in the case of the seventh modification described as below. That is, in the seventh modification, the trace gas supply passage 4 is connected to the engine 2 as shown in the virtual line 4' in FIG. 19.

For the trace gas, any inert gas other than helium gas may be used, and for the trace gas analyzer 13, various mass spectrometers such as quadruple mass spectrometer may be used in addition to sector field mass spectrometer. In addition, it is needless to say that this invention can be applied not only to automobile engines but also to the calibration of the sensitivity of trace gas flow meter designed to measure the flow rate of the exhaust gas of other internal combustion engines such as motors and boilers.

In the exhaust gas flow rate measuring equipment of the internal combustion engines according to the first and the second modifications, since the tube with a suitable inside diameter is used for a member to connect the gas sampling passage to the trace gas analyzer, the dead volume at the connections can be reduced as much as possible, and the delay in response caused by the dead volume can be reduced. Consequently, time lag with other gas analyzers connected to the gas sampling passage can be minimized, and the highly accurate exhaust gas analysis can be carried out.

In the exhaust gas flow rate measuring equipment of the internal combustion engines according to the third and the fourth modifications, since the gas sampling passage is connected to the trace gas analyzer via porous thin film which can practically penetrate helium gas only as trace gas, a problem in that the sensitivity varies in accordance with change in vacuum pressure that depends on the gas component ratio in the exhaust gas can be solved.

In the exhaust gas flow rate measuring equipment of the internal combustion engines according to the fifth modification, since a tube whose cross-sectional profile is polygon is located in the exhaust pipe through which exhaust gas flows and from holes equipped in this tube the trace gas is designed to spout out into the exhaust gas, a preferable turbulent is generated downstream of the point for introducing the trace gas into the exhaust pipe, and the exhaust gas and trace gas are surely and thoroughly mixed. Consequently, the exhaust gas flow rate can be measured with high accuracy.

In addition, in the sensitivity calibration method of the trace gas flow meter according to the sixth and the seventh modifications, since calibration is carried out with CO₂ contained in a large quantity next to N₂ in the exhaust gas taken into account, changes in the sensitivity can be suppressed low and the desired calibration can be surely carried out.

## Claims

1. An exhaust gas flow rate measuring equipment of internal combustion engines comprising
- an exhaust passage (3) linked to the internal combustion engine (2) and connected to a gas sampling passage (7) for supplying a sample gas to a gas analyzer (11) and a trace gas analyzer (13) located in said gas sampling passage (7), wherein:
- the concentration of the trace gas is measured by the said trace gas analyzer (13) when the trace gas is introduced upstream of the connection point of the gas sampling passage (7) with respect to said exhaust passage (3),
- the flow rate of the exhaust gas of the internal combustion engine (2) is measured based on the concentration of this trace gas and the introduction rate of the trace gas, and
- said gas sampling passage (7) is connected to the trace gas analyzer (13) through a tube (14) with a suitable inside diameter.

2. An exhaust gas flow rate measuring equipment of internal combustion engines comprising
- an exhaust passage (3) linked to the internal combustion engine (2) and connected to a gas sampling passage (7) for supplying a sample gas to a gas analyzer (11) and a trace gas analyzer (13) located in said gas sampling passage (7), wherein:
- the concentration of the trace gas is measured by the said trace gas analyzer (13) when the trace gas is introduced upstream of the connection point of the gas sampling passage (7) with respect to said exhaust passage (3),
- the flow rate of the exhaust gas of the internal combustion engine (2) is measured based on the concentration of this trace gas and the introduction rate of the trace gas, and
- helium gas is used for the said trace gas and said gas sampling passage (7) is connected to said trace gas analyzer (13) via the porous thin film (40) which preferably penetrates helium gas.

3. An exhaust gas flow rate measuring equipment according to claim 1 or 2, wherein said trace gas is introduced upstream of the internal combustion engine (2).

4. An exhaust gas flow rate measuring equipment according to claim 2 or claim 3, wherein the material of the said porous thin film (40) is polytetrafluoroethylene.

5. An exhaust gas flow rate measuring equipment of internal combustion engines designed to introduce a trace gas into an exhaust pipe (3a) linked to the internal combustion engine (2), measure the trace gas concentration downstream the introduction point of this trace gas, and measure the flow rate of exhaust gas of the internal combustion engine (2) based on the said trace gas introduction rate and the trace gas measuring concentration, wherein a tube (36) connected to the head end of a trace gas introduction tube (4) and whose cross-sectional profile is polygonal is installed in the said exhaust pipe (3a), and the trace gas is spouted into the discharge gas from at least one hole (38) provided in said tube (36).

6. An exhaust gas flow rate measuring equipment according to claim 5 wherein both end portions of said tube (36) are separated from the inner wall of said exhaust pipe (3a).

7. An exhaust gas flow rate measuring equipment according to claim 5 or 6, wherein the cross-sectional profile of said tube (36) in the flow direction of the exhaust gas is asymmetrical.

8. An exhaust gas flow rate measuring equipment according to any one of claims 5 to 7, wherein the cross-sectional profile of said tube is either triangle, quadrangle, or hexagon.

9. A sensitivity calibration process of a trace gas flow meter comprising steps of connecting a gas sampling passage (7) to an exhaust passage (3) linked to an internal combustion engine (2) for supplying a sample gas to a gas analyzer (11), installing a trace gas analyzer (13) in said gas sampling passage (7), measuring the trace gas concentration with said trace gas analyzer (13) when the trace gas is introduced upstream from the connection of said gas sampling passage (7) to said exhaust passage (3), and measuring the flow rate of the exhaust gas of the internal combustion engine (2) based on this trace gas concentration and the trace gas introduction rate, wherein a gas containing a concentration level similar to that of CO₂ contained in the exhaust gas is used for calibration gas.

10. A sensitivity calibration process according to claim 9, wherein aid trace gas is introduced upstream said internal combustion engine (2).
